# EUROPEAN PATENT SPECIFICATION

(11) **EP 1 690 677 B1**
(45) Date of publication and mention of the grant of the patent: **26.10.2011**
(21) Application number: 04772048.7
(22) Date of filing: 24.08.2004
(51) Int. Cl.: B32B 27/20

(54) **METHOD FOR PRODUCING A MULTI-LAYER RESIN FILM AND METHOD FOR PRODUCING A METAL SHEET COATED WITH RESIN**
VERFAHREN ZUR HERSTELLUNG EINER MEHRLAGIGEN HARZFOLIE UND VERFAHREN ZUR HERSTELLUNG VON MIT HARZ BESCHICHTETEM BLECH
PROCEDE DE PRODUCTION D'UN FILM DE RESINE MULTICOUCHE ET PROCEDE DE PRODUCTION D'UNE TOLE RECOUVERTE D'UNE RESINE

(30) Priority: 17.11.2003 JP 2003386215
(43) Date of publication of application: 16.08.2006
(73) Proprietor: Toyo Kohan Co., Ltd., Tokyo 102-8447 (JP)
(72) Inventor: MATSUBARA, Yasuhiro c/o Toyo Kohan Co., Ltd., Kudamatsu-shi, Yamaguchi-ken 744-8611 (JP); MAIDA, Norimasa c/o Toyo Kohan Co., Ltd., Kudamatsu-shi, Yamaguchi-ken 744-8611 (JP); NAKAMURA, Takuji c/o Toyo Kohan Co., Ltd, Kudamatsu-shi, Yamaguchi-ken 744-8611 (JP); INAZAWA, Hiroshi c/o Toyo Kohan Co., Ltd., Kudamatsu-shi, Yamaguchi-ken 744-8611 (JP); KOJO, Harunori c/o Toyo Kohan Co., Ltd., Kudamatsu-shi, Yamaguchi-ken 744-8611 (JP)
(74) Representative: Vossius & Partner
(86) International application number: PCT/JP2004/012087
(87) International publication number: WO 2005/046989

(56) References cited:
- EP-A- 0 807 517
- JP-A- 10 086 308
- JP-A- 11 309 770
- JP-A- 2000 071 388
- JP-A- 2001 253 033
- JP-A- 2004 299 390
- US-A- 5 922 164
- DATABASE WPI Week 199941 Thomson Scientific, London, GB; AN 1999-487592 XP002539511 -& JP 11 207908 A (UNITIKA LTD) 3 August 1999 (1999-08-03)
- SAWADA K. ET AL.: 'PLastic oshisashi seikei no saishin gijutsu' KABUSHIKI KAISHA RABA DAIJESUTO SHA HAKKO vol. 1, 25 June 1993, pages 121 - 124, XP002989343

## Description

The present invention relates to a multilayer resin film composed of a plurality of resin layers differing from one another in melt tension and melt viscosity, and having a low surface unevenness, a resin-coated metal sheet coated with such a multilayer resin film, a method of manufacturing a multilayer resin film and a method of manufacturing a resin-coated metal sheet. More particularly, it relates to a manufacturing method which enables the high-speed production of a resin film at a film-forming speed of 100 m/min. or higher.

In the field of drink cans, etc., there are used a large number of cans made by drawing, or drawing and ironing resin film-coated metal sheets. This is due to the resin film exhibiting both excellent adhesiveness to the metal sheet during its working and excellent impermeability to the contents of the cans. With the diversification of the contents which are canned, and an improvement in workability for a further reduction in weight of cans for reducing the cost thereof, it has recently become difficult for a monolayer resin film to realize both excellent impermeability and excellent working adhesiveness in the cans made by shaping such resin film-coated metal sheets. Accordingly, attempts have been made to rely on separate monolayer resin films having excellent working adhesiveness and excellent impermeability, respectively, forming those individual monolayer films into a multilayer film and coating a metal sheet therewith to employ it for a resin film-coated metal sheet as a resin film having more excellent working adhesiveness and impermeability than before.

When forming resin films having different physical properties into a multilayer film as stated above, however, it is necessary to melt by heating resins having different melting points and having different melt viscosities when melted by heating at the same temperature and co-extrude them into a film, and when resins having different melting points are melted by heating, it is often the case that a resin having a high melting temperature exhibits a high melt viscosity, while a resin having a low melting temperature exhibits a low melt viscosity, when they are melted by heating at the same temperature. When the resins melted by heating at the same temperature are formed into a multilayer laminate by using a multi-manifold die, the difference in melt viscosity between adjoining resins is likely to cause turbulence in the flow of molten resins in the boundary between resin layers when the individual molten resins passing through the individual manifolds are caused to meet, resulting in a thickness variation (unevenness) occurring to a film surface. The thickness variation occurring to the film surface is called a flow mark and is not merely a visual fault, but also disables uniform working when drawing, or drawing and ironing are performed to form a can body, or the top opening of the can is necked (to have its diameter reduced), resulting in a broken body, etc. If the molten resins are extruded at a high speed to realize an improved production speed, a widthwise dimensional difference, or ear formation is promoted, and the resins extruded from the die lips do not drop uniformly, but drop in a pulsating way, making it impossible to obtain a film of uniform thickness. These are more likely to occur if the film contains a pigment as a coloring component. The methods disclosed in the official gazettes mentioned below are tried to restrain the occurrence of such ears and film thickness variation (unevenness or flow marks).

Patent Literature 1 discloses a method of preventing the occurrence of a flow mark by selecting and using resins having a small difference from one another in melting point and viscosity upon melting by heating, but the method disclosed in this official gazette is applicable only for highly limited uses, since the physical properties required of a resin film often make it imperative to select resins differing greatly from one another in melting point and viscosity upon melting by heating.

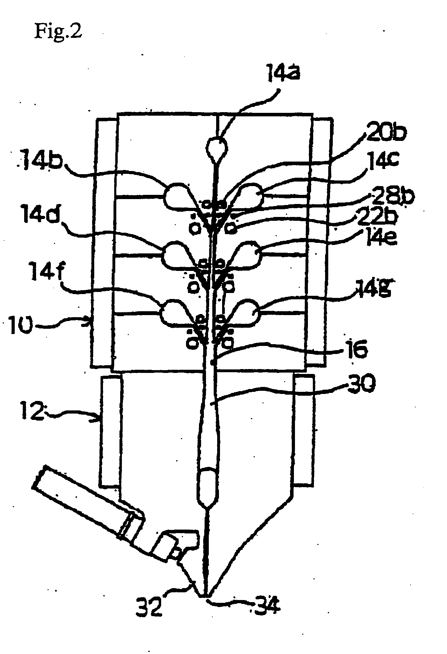

Patent Literature 2 discloses a multilayer extrusion molding method based on a feed block method in which a plurality of resin layers melted by heating are caused to meet in front of a T-die, and combining a feed block and a T-die connected to the feed block for molding a multilayer resin film, in which faulty phenomena, such as deviation in the lamination interface at which the layers meet into a multilayer film, are reduced by the temperature control of heaters installed in the feed block. FIG. 2 schematically shows an example of multilayer extrusion molding apparatus. The multilayer extrusion molding apparatus is composed of a feed block 10 having a plurality of manifolds 14a to 14g and a T-die 12 connected to the feed block 10 below a meeting area 16 for resins from the manifolds 14a to 14g. Heaters 20b, 22b, a thermometer 28b, etc. are installed around the meeting point of resin passages from the manifolds 14a to 14g, for example, in the resin passage at the outlet of the manifold 14b (reference is made to the manifold 14b alone for simplicity of explanation), for controlling the temperatures/viscosities of the molten resin materials fed from the manifolds to make the temperatures/viscosities uniform and thereby reduce any faulty phenomenon in the lamination interface where they meet to form a multilayer resin.

According to the feed block method, however, the interior of the T-die into which the resins flow after meeting in a multilayer form is of a monolayer structure which enlarges the distance for the resins meeting in a multilayer form to move from the meeting area 16 to the outlet opening 34 of the die lips 32, and while the molten resins move along that distance, the T-die is heated only as a whole and cannot maintain a temperature difference between the different heating temperatures which the resin layers have immediately after meeting and at which they have the same viscosity, and the variations in the heating temperatures of the resin layers at the outlet opening 34 make it impossible to maintain the same melt viscosity of the resin layers, thereby making it difficult to prevent the occurrence of any flow mark. Thus, the method according to this official gazette is also applicable merely for limited uses as when using resins not differing greatly in the melting points which enable them to have the same melt viscosity. The methods disclosed in these official gazettes are also unable to achieve a high film-forming rate when the molten resins have a low tension.

The following is prior art literature information relevant to the present application:
Patent Literature 1: Official Gazette JP-A-08-290532;
Patent Literature 2: Official Gazette JP-A-11-309770.

It is an object of the present invention to provide a multilayer film formed from a plurality of resin layers differing from one another in melt viscosity, particularly a multilayer resin film having a small surface unevenness, a resin-coated metal sheet made by laminating a multilayer resin film on a metal sheet, a method of manufacturing a multilayer resin film in which a plurality of molten resins differing from one another in melt viscosity are laminated on one another to form a multilayer resin film at a high speed and without having any unevenness formed on the film surface, and a method of manufacturing a resin-coated metal sheet in which a multilayer resin film is laminated on a metal sheet. It is, among others, concerned with a manufacturing method which enables the high-speed production of a resin film at a film-forming speed of 100 m/min. or higher.

A subject matter of the present invention is a method of manufacturing a multilayer resin film characterized by forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold may be held at a higher level than the temperatures of the extruder through which a resin of low melt viscosity will pass, the corresponding manifold and the corresponding die portion adjoining that manifold, so that the adjoining resin layers may have a difference in melt viscosity of 3, 000 poises or less at a shear rate of 20 to 500 s⁻¹, and so that the resin containing a coloring component may have a melt tension Tm of 0.5 g ≤ Tm < 1.0 g and a thickness equal to 1/2 or more of the total thickness (claim 1), or Tm ≥ 1.0 g and a thickness equal to 1/3 or more of the total thickness (claim 2).
Another subject matter of the present invention is a method of manufacturing a multilayer resin film characterized by forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold may be held at a higher level than the temperatures of the extruder through which a resin of low melt viscosity will pass, the corresponding manifold and the corresponding die portion adjoining that manifold, so that the adjoining resin layers may have a difference in melt viscosity of 3, 000 poises or less at a shear rate of 20 to 500 s⁻¹, and so that the resin not containing any coloring component and having a melt tension of 1 g or more may have a thickness equal to 1/3 or more of the total thickness (claim 3).

A subject matter of the present invention is also a method of manufacturing a resin-coated metal sheet characterized by forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold may be held at a higher level than the temperatures of the extruder through which a resin of low melt viscosity will pass, the corresponding manifold and the corresponding die portion adjoining that manifold, so that the adjoining resin layers may have a difference in melt viscosity of 3, 000 poises or less at a shear rate of 20 to 500 s⁻¹, and so that the resin containing a coloring component may have a melt tension Tm of 0.5 g ≤ Tm < 1.0 g and a thickness equal to 1/2 or more of the total thickness (claim 4), or Tm ≥ 1.0 g and a thickness equal to 1/3 or more of the total thickness (claim 5), and by extruding it onto a metal sheet.
A subject matter of the present invention is furthermore a method of manufacturing a resin-coated metal sheet characterized by forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold may be held at a higher level than the temperatures of the extruder through which a resin of low melt viscosity will pass, the corresponding manifold and the corresponding die portion adjoining that manifold, so that the adjoining resin layers may have a difference in melt viscosity of 3,000 poises or less at a shear rate of 20 to 500 s⁻¹, and so that the resin not containing any coloring component and having a melt tension of 1.0 g or more may have a thickness equal to 1/3 or more of the total thickness, and by extruding it onto a metal sheet (claim 6).

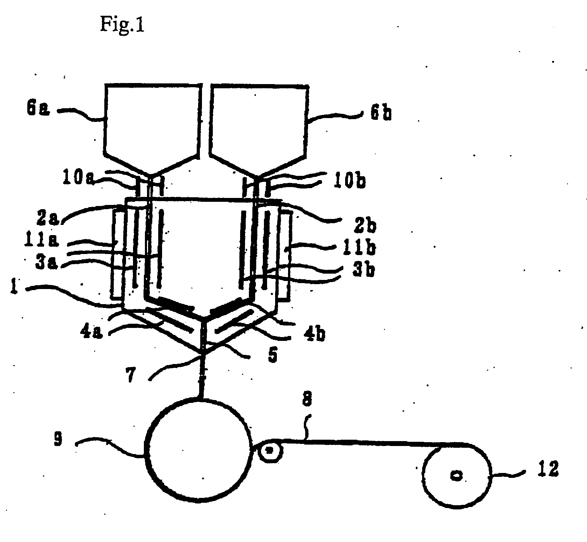

[Fig. 1] FIG. 1 is a schematic diagram showing an example of the method of manufacturing a multilayer film according to the present invention.
[FIG. 2] FIG. 2 is a schematic diagram showing an example of the known method of manufacturing a multilayer film. Referring to the symbols in the drawings, 1 denotes a multi-manifold die, 2a and 2b denote manifolds, 3a, 3b, 4a and 4b denote heaters, 5 denotes a lip land, 6a and 6b denote extruders, 7 denotes a discharge port, 8 denotes a multilayer resin film, 9 denotes a cooling roll, 10a, 10b, 11a and 11b denote heaters, 12 denotes a winder, 14a, 14b, 14c, 14d, 14e, 14f and 14g denote manifolds, 16 denotes a meeting area, 20b and 22b denote heaters, 28 denotes a thermometer, 32 denotes a die lip and 34 denotes an outlet opening.

The present invention will now be described with reference to the drawings. FIG. 1 is a schematic diagram showing an example of the method of manufacturing a multilayer film according to the present invention which is composed of a plurality of resin layers differing from one another in melt viscosity. The case in which the method is employed for forming a two-layer resin film is shown as the example for simplicity of explanation. A multi-manifold die 1 having two manifolds 2a and 2b is equipped with an extruder 6a for heating, melting and extruding a resin of high melt viscosity and an extruder 6b for heating, melting and extruding a resin of low melt viscosity, which are connected to 2a and 2b, respectively, through resin passages. The manifolds 2a and 2b are combined in the lower portion of the multi-manifold die 1 to form a lip land 5 and connected with a discharge port 7 formed in a die lip at the lower end of the multi-manifold die 1.

The multi-manifold die 1 is equipped with a heater 11a for heating that side of the die body through which the resin of high melt viscosity will pass, a heater 11b for heating that side through which the resin of low melt viscosity will pass, and heaters 3a and 3b and heaters 4a and 4b installed adjacent to the manifolds 2a and 2b, respectively, for heating the manifolds, and is further equipped with heaters 10a and 10b for heating the resin passages connecting the extruders 6a and 6b with the multi-manifolds 2a and 2b, respectively. Temperature measuring devices not shown, such as thermocouples, are installed near the areas equipped with the heaters for measuring the temperatures of those areas to control the heating temperatures to a specific level and controlling the temperatures of the individual heaters so that the molten resins in the manifolds 2a and 2b may have a viscosity difference falling within a specific range.

The two kinds of resins heated and melted in the extruders 6a and 6b and having a difference in melt viscosity of 3,000 to 20, 000 poises at the same melting temperature and a shear rate of 20 to 500 s⁻¹ pass through the manifolds 2a and 2b formed in the multi-manifold die 1, are laminated at the inlet of the lip land 5 combined in the lower portion of the multi-manifold die 1, are discharged from the discharge port 7 formed in the die lip at the lower end of the die 1 onto the cooling roll 9 installed below the discharge port 7 and so constructed as to have a cooling medium like water circulated through its interior, and are cooled and solidified into a multilayer resin film 8, which is wound by a winder 12, such as a coiler for winding it continuously in a coil form.

The apparatus for manufacturing a multilayer resin film as constructed as described above can be employed to form a multilayer resin film of the present invention, as will be described below.
The resin film which is applicable is not specifically limited, but the polyester resins which will now be mentioned are, for example, applicable. As the acid components from which the polyester resins are derived, it is possible to mention dibasic aromatic dicarboxylic acids such as terephthalic acid, isophthalic acid, orthophthalic acid, p-β-oxyethoxybenzoic acid, naphthalene-2, 6-dicarboxylic acid, diphenoxyethane-4,4'-dicarboxylic acid and 5-sodium sulfoisophthalic acid, alicyclic dicarboxylic acids such as hexahydroterephthalic acid and cyclohexanediacetic acid, aliphatic dicarboxylic acids such as adipic acid, sebacic acid and dimer acids, polybasic acids such as trimellitic acid, pyromellitic acid, hemimellitic acid, 1,1,2,2-ethanetetracarboxylic acid, 1,1,2-ethanetricarboxylic acid, 1,3,5-pentatricarboxylic acid, 1,2,3,4-cyclopentanetetracarboxylic acid and biphenyl-3,4,3',4'-tetracarboxylic acid. They can, of course, be used alone or in a combination of two or more kinds. As the alcohol components from which the polyesters are derived, it is possible to mention diols such as ethylene glycol, propylene glycol, 1,4-butanediol, neopentyl glycol, 1,6-hexylene glycol, diethylene glycol, triethylene glycol and cyclohexane dimethanol, polyhydric alcohols such as pentaerythritol, glycerol, trimethylolpropane, 1,2,6-hexanetriol, sorbitol and 1,1,4,4-tetrakis-(hydroxymethyl) cyclohexane. They can, of course, be used alone or in a combination of two or more kinds.

All of the coloring agents hitherto used for coloring resin films can be employed as the coloring component used in the multilayer resin film of the present invention and the following can, for example, be mentioned:
Black pigments: Carbon black, magnetite, acetylene black, lamp black, aniline black;
Yellow pigments: Chrome yellow, zinc yellow, cadmium yellow, yellow iron oxide, mineral fast yellow, nickel titanium yellow, Naples yellow, Naphthol Yellow S, Hansa Yellow G, Hansa Yellow 10G, Benzidine Yellow G, Benzidine Yellow GR, Quinoline Yellow Lake, Permanent Yellow NCG, Tartrazine Yellow Lake;
Orange pigments: Chrome orange, molybdenum orange, Permanent Orange GTR, Pyrazolone Orange, Vulcan Orange, Indanthrene Brilliant Orange RK, Benzidine Orange G, Indanthrene Brilliant Orange GK;
Red pigments: Iron red, cadmium red, minium, cadmium mercury sulfide, Permanent Red 4R, Lithol Red, Pyrazolone Red, Watchung Red Calcium Salt, Lake Red D, Brilliant Carmine 6B, Eosine Lake, Rhodamine B Lake, Alizarine Lake, Brilliant Carmine 3B;
Violet pigments: Manganese violet, Fast Violet B, Methyl Violet Lake;
Blue pigments: Ultramarine blue, Prussian blue, cobalt blue, Alkali Blue Lake, Victoria Blue Lake, Phthalocyanine Blue, metal-free Phthalocyanine Blue, partially chlorinated Phthalocyanine Blue, Fast Sky Blue, Indanthrene Blue BC;
Green pigments: Chrome green, chromium oxide, Pigment Green B, Malachite Green Lake, Fanal Yellow Green G;
White pigments: Rutile or anatase type titanium dioxide, zinc white, gloss white, pearlite, sulfuric acid precipitated pearlite, calcium carbonate, gypsum, precipitated silica, aerosil, talc, calcined or uncalcined clay, barium carbonate, alumina white, synthetic or natural mica, synthetic calcium silicate, magnesium carbonate.

The coloring agent preferably has a particle diameter in the range of from 0.05 to 2 µm and more preferably from 0.1 to 0.5 µm. This makes it possible to achieve both of excellent workability and hiding power. The coloring agent which is particularly suitable for the object of the present invention is titanium dioxide, which is white and has a high hiding power.
The proportion of the coloring agent in the resin is not specifically limited if it enables the melt viscosity and melt tension of the resin containing the coloring component to fall within the range stated above, and it may be selected to suit the application as intended.

Pellets of the resins having a different melt viscosity from each other in the range of 3, 000 to 20, 000 poises at the same heating and melting temperature and a shear rate of 20 to 500 s⁻¹ as stated above, one of them containing the coloring agent (two kinds of resins in the case of FIG. 1, and for the sake of simplicity, description will be based on the case in which the resin heated and melted in the extruder 6b shown in FIG. 1 contains the coloring component), are heated and melted in the extruders 6a and 6b, are guided to the manifolds 2a and 2b connected formed in the multi-manifold die 1 below the respective extruders and connected thereto by the respective resin passages and move toward the meeting area. On that occasion, the resins are heated by the heaters 10a and 10b, heaters 11a and 11b, heaters 3a and 3b and heaters 4a and 4b, while the heating temperatures of the heaters are measured by the temperature measuring devices installed near the heaters, such as thermocouples, and controlled so that the resins may have a difference in melt viscosity of 3,000 poises or less at a shear rate of 20 to 500 s⁻¹.

Then, the molten resins having their melt viscosity difference regulated to 3,000 poises or less at a shear rate of 20 to 500 s⁻¹ as stated above are laminated at the inlet of the lip land 5 formed by the meeting of the manifolds 2a and 2b in their meeting area, and are discharged from the discharge outlet 7 onto the cooling roll 9 and solidified into a multilayer (two-layer) film 8, but when the molten resins are extruded at a high speed, the extruded film of the molten resins pulsates and has a non-uniform thickness along its length, or has ears formed along its width if the resin containing the coloring component has a melt tension of less than 0.5 g at its extruding temperature, or if the resin not containing any coloring component has a melt tension of less than 1 g. Such pulsation and ear formation can be prevented if the extrusion of the resins is controlled so that, when a resin having a melt tension Tm in the range of 0.5 g ≤ Tm < 1. 0 g is employed as the resin containing the coloring component, the layer of the resin having a melt tension Tm in the range of 0.5 g ≤ Tm < 1.0 g may occupy a half or more of the total thickness of the extruded multilayer film, or when a resin having a melt tension Tm ≥ 1.0 g is employed, the layer of the resin having a melt tension Tm in the range of Tm ≥ 1.0 g may occupy one-third or more of the total thickness of the extruded multilayer film, or when a resin having a melt tension of 1 g or more is employed as the resin not containing the coloring component, the thickness of the resin having a melt tension of 1 g or more may occupy one-third or more of the total thickness of the extruded multilayer film. This makes it possible to form the film at a still higher speed.

The multilayer (two-layer) film 8 formed from the resins having their melt viscosity difference controlled, at least one of the resins containing the coloring component, and discharged in a controlled way from the discharge outlet 7 onto the cooling roll 9 and solidified, as described above, is wound by the winder 12. Thus, the multilayer resin film of the present invention is manufactured.

The multilayer resin film of the present invention which is produced as described above preferably has a surface unevenness of 5 µm or less. Its unevenness exceeding 5 µm is not merely a visual fault, but when a multilayer resin filed-coated metal sheet formed by laminating the multilayer resin film on a metal sheet to coat it is shaped into a can by drawing, or by drawing and ironing, or when a can has its top opening necked, the separation of the resin film from the metal sheet or any local difference in workability thereof disables it to be shaped into a can, as its drawing, or its drawing and ironing form a broken can, or it crashes during its necking.

The multilayer resin film of the present invention can make a multilayer resin film-coated metal sheet when the heated and melted multilayer resins are discharged in a film form directly from the discharge portion of the die lip onto a metal sheet to coat it by employing the method of manufacturing a multilayer resin film as described above. The multilayer resin film formed by using the method of manufacturing a multilayer resin film as described above can also be laminated on a metal sheet directly or with an adhesive therebetween by using a known laminating method to make a multilayer resin film-coated metal sheet. When the heated and melted multilayer resins are discharged onto a metal sheet directly in a film form to be laminated on it and coat it, it is preferable for the reasons as stated above that the multilayer resin film as laminated and coated have a surface unevenness of 5 µm or less.
Although the foregoing description has been of the case in which a two-layer resin film is formed from two kinds of resins, it is needless to say that it is also possible to form a resin film of three or more layers by employing a multi-manifold die having three or more manifolds and three or more extruders connected to those manifolds, respectively. Examples

The present invention will now be described in detail by way of examples.

### (Comparative Example 1)

A polyester resin A of high impermeability (an ethylene terephthalate/ethylene isophthalate copolymer (containing 10 mole % of ethylene isophthalate) and having a melting point of 220°C, an intrinsic viscosity of 0.85 at 260°C, a melt viscosity of 7, 500 poises at a shear rate of 100 s⁻¹ and a melt tension of 0.7 g) (hereinafter referred to simply as resin A, with its melt tension determined by employing a Capirograph 3A (trade name of a product of Toyo Seiki Kabushiki Kaisha) under conditions including a resin temperature of 260°C, an extruding rate of 10 mm/min., a winding rate of 10 m/min., a nozzle diameter of 1 mm and a nozzle length of 10 mm) and a resin (having a melt viscosity of 4,000 poises at 260°C and a shear rate of 100 s⁻¹ and a melt tension of 0.4 g) obtained by adding 27% by weight of TiO₂ as a coloring component to a polyester resin B of high working adhesiveness (an ethylene terephthalate/ ethylene isophthalate copolymer (containing 15 mole % of ethylene isophthalate) and having a melting point of 215°C, an intrinsic viscosity of 0.9, a melt viscosity of 9,000 poises at a melting point of 215°C, a temperature of 260°C and a shear rate of 100 s⁻¹ and a melt tension of 0.7 g) (hereinafter referred to simply as resin B) were melted by using extruders and heating the resin A to 265°C and the resin B (containing 27% by weight of TiO₂) to 260°C. Then, the molten resins A and B were guided to the manifolds of a multi-manifold die having two manifolds connected to two extruders by resin passages and individually temperature-controlled heaters adjoining the manifolds, while the amounts in which they were discharged were so controlled as to form a two-layer resin film having a thickness of 16 µm in which the thicknesses of the resins A and B would have a ratio of 1:3. That side of the multi-manifold die through which the molten resin A would pass, and the resin passage and manifold through which the molten resin A would pass, and that side of the multi-manifold die through which the molten resin B would pass, and the resin passage and manifold through which the molten resin B would pass, had all been preheated to 260°C by the heaters adjoining them, respectively, and then, the molten resins A and B were caused to pass through their respective manifolds. The temperatures of the resins and their viscosities at a shear rate of 100 s⁻¹ immediately ahead of the T-die were 265°C and about 6,500 poises in the case of the resin A and 260°C and 4, 000 poises in the case of the resin B + TiO₂. After the molten resins A and B had been heated as described, the molten resins A and B were caused to meet and lie on each other in the meeting area, passed therefrom through the lip land and discharged as a two-layer resin from the discharge port at a rate of 70 m/min., but the discharged resin caused ear formation and pulsation and gave a film thickness accuracy of 7 µm or more along its length. The discharged resin was dropped onto a cooling roll installed below the discharge port and having water circulated therein, and solidified into a two-layer resin film having a width of about 1 m and wound by a coiler.

### (Example 1)

The resin A as described above and a resin (having a melt viscosity of 4,500 poises at 260°C and a shear rate of 100 s⁻¹ and a melt tension of 0.65 g) obtained by adding 27% by weight of TiO₂ as a coloring component to a polyester resin C (an ethylene terephthalate/ ethylene isophthalate copolymer (containing 15 mole % of ethylene isophthalate) modified with trimellitic acid (0.3 mole %) and having a melting point of 215°C, an intrinsic viscosity of 0.8, a melt viscosity of 8, 000 poises at a temperature of 260°C and a shear rate of 100 s⁻¹ and a melt tension of 1.2 g)(hereinafter referred to simply as resin C) were melted by using extruders and heating the resin A to 265°C and the resin C (containing 27% by weight of TiO₂) to 260°C. Then, the molten resins A and C (containing 27% by weight of TiO₂) were guided to the manifolds of a multi-manifold die having two manifolds connected to two extruders by resin passages and individually temperature-controlled heaters adjoining the manifolds, while the amounts in which they were discharged were so controlled as to form a two-layer resin film having a thickness of 16 µm in which the thicknesses of the resins A and C would have a ratio of 1:3. That side of the multi-manifold die through which the molten resin A would pass, and the resin passage and manifold through which the molten resin A would pass had been preheated to 260°C by the heaters adjoining them, and that side of the multi-manifold die through which the molten resin A would pass, and the resin passage and manifold through which the molten resin C would pass had been preheated to 250°C by the heaters adjoining them, respectively, and then, the molten resins A and C were caused to pass through their respective manifolds. The temperatures of the resins and their viscosities at a shear rate of 100 s⁻¹ immediately ahead of the T-die were 265°C and about 6,500 poises in the case of the resin A and 250°C and about 5,000 poises in the case of the resin C + TiO₂. After the molten resins A and C had been heated as described, the molten resins A and C were caused to meet and lie on each other in the meeting area, passed therefrom through the lip land and discharged as a two-layer resin from the discharge port at a rate of 100 m/min., and the discharged resin did not pulsate, or have any ear formed widthwise of the film. The discharged resin was dropped onto a cooling roll installed below the discharge port and having water circulated therein, and solidified into a two-layer resin film having a width of about 1 m and wound by a coiler.

### (Example 2)

The resin (having a melt viscosity of 4,000 poises at 260°C and a shear rate of 100 s⁻¹ and a melt tension of 0.4 g) obtained by adding 27% by weight of TiO₂ as a coloring component to a polyester resin B and the resin C were melted by using extruders and heating the resin B (containing 27% by weight of TiO₂) to 260°C and the resin C to 270°C. Then, the molten resins C and B were guided to each of the manifolds of a multi-manifold die having two manifolds connected to two extruders by resin passages and individually temperature-controlled heaters adjoining the manifolds, while the amounts in which they were discharged were so controlled as to form a two-layer resin film having a thickness of 16 µm in which the thicknesses of the resins C and B (containing 27% by weight of TiO₂) would have a ratio of 1:2. That side of the multi-manifold die through which the molten resin C would pass, and the resin passage and manifold through which the molten resin B would pass had been preheated to 260°C by the heaters adjoining them, and that side of the multi-manifold die through which the molten resin C would pass, and the resin passage and manifold through which the molten resin B would pass had been preheated to 260°C by the heaters adjoining them, respectively, and then, the molten resins C and B were caused to pass through their respective manifolds. The temperatures of the resins and their viscosities at a shear rate of 100 s⁻¹ immediately ahead of the T-die were 268°C and about 6,300 poises in the case of the resin C and 260°C and about 4,000 poises in the case of the resin B + TiO₂. After the molten resins C and B had been heated as described, the molten resins C and B were caused to meet and lie on each other in the meeting area, passed therefrom through the lip land and discharged as a two-layer resin from the discharge port at a rate of 100 m/min., and the discharged resin did not pulsate, or have any ear formed widthwise of the film. The discharged resin was dropped onto a cooling roll installed below the discharge port and having water circulated therein, and solidified into a two-layer resin film having a width of about 1 m and wound by a coiler.

### <Evaluation for Properties>

The resin films produced according to Examples 1 and 2 and Comparative Example 1 as described above were evaluated for properties as will now be described.

### <Thickness Unevenness>

Each of the resin films according to Examples 1 and 2 and Comparative Example 1 had its thickness measured continuously along its whole width (about 1 m) every one meter (16 points) from a point of 15 m of its length five minutes after the formation of the film had been started, and the difference between the maximum and minimum thicknesses of each film was determined as its thickness unevenness from all the results of measurements made along its whole width at 16 points spaced apart along its length.
The results of the evaluation are shown in Table 1.

**[Table 1]**

| Example or Comparative Example | Evaluation for properties | Film-forming rate |
|---|---|---|
| | Thickness unevenness (µm) | |
| Comparative Example 1 | ≥ 7 µm | 70 m/min. |
| Example 1 | ≤ 3 µm | 100 m/min. |
| Example 2 | ≤ 3 µm | 100 m/min. |

When a multilayer resin film is formed so that the resin containing a coloring component in a film containing at least one kind of coloring component may have a melt tension Tm in the range of 0.5 g ≤ Tm < 1.0 g and a thickness equal to a half or more of the total thickness, or Tm ≥ 1.0 g and a thickness equal to one-third or more of the total thickness, or so that the film not containing any coloring component may have a melt tension of 1 g or more and a thickness equal to one-third or more of the total thickness, the formation of the film at a high speed does not enhance any pulsation or ear formation, but there is produced a resin film having only a very small thickness unevenness, as shown in Table 1.

### Industrial Applicability

The resin-coated metal sheet made by laminating a multilayer resin film of the present invention on a metal sheet is suitable for shaping into a drawn can or a drawn and ironed can and can reliably be shaped into a can body, since its drawing, or drawing and ironing, or the necking of an opening does not cause the separation of the resin film from the metal sheet or form any local area worked to a different degree, but the can does not break during its drawing or its drawing and ironing, or crash during its necking.
Two or more kinds of resins including at least one kind of resin containing a coloring component and having a difference of 3,000 to 20,000 poises in melt viscosity at the same heating and melting temperature and a shear rate of 20 to 500 s⁻¹ are melted and laminated into a multilayer film by employing a multi-manifold die, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold may be held at a higher level than the temperatures of the extruder through which a resin of low melt viscosity will pass, the corresponding manifold and the corresponding die portion adjoining that manifold, so that the adjoining resin layers may have a difference in melt viscosity of 3, 000 poises or less at a shear rate of 20 to 500 s⁻¹, and so that the resin containing a coloring component may have a melt tension Tm in the range of 0.5 g ≤ Tm < 1.0 g and a thickness equal to a half or more of the total thickness, or Tm ≥ 1.0 g and a thickness equal to one-third or more of the total thickness, or so that the resin having a melt tension of 1 g or more and not containing any coloring component may have a thickness equal to one-third or more of the total thickness, and the formation of a film at a high speed does not enhance any pulsation or ear formation, but there is produced a resin film having only a very small thickness unevenness. The multilayer film produced as described has a surface unevenness of 5 µm or less, and is not only excellent in visual flatness, but is also free from any stress based on its melt viscosity as in the case of any usual multilayer film, and when the multilayer resin film is laminated on a metal sheet to coat it and make a multilayer resin film-coated metal sheet, the resin film is not turned up and separated from the metal sheet, even if the resin film may have a crack.

## Claims

1. A method of manufacturing a multilayer resin film **characterized by** forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold are held at a higher level than the temperatures of the extruder through which a resin of low melt viscosity will pass, the corresponding manifold and the corresponding die portion adjoining that manifold, so that the adjoining resin layers have a difference in melt viscosity of 3, 000 poises or less at a shear rate of 20 to 500 s⁻¹, and so that the resin containing a coloring component has a melt tension Tm in the range of 0.5 g ≤ Tm < 1.0 g and a thickness equal to a half or more of the total thickness.

2. A method of manufacturing a multilayer resin film **characterized by** forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold are held at a higher level than the temperatures of the extruder through which a resin of low melt viscosity will pass, the corresponding manifold and the corresponding die portion adjoining that manifold, so that the adjoining resin layers have a difference in melt viscosity of 3, 000 poises or less at a shear rate of 20 to 500 s⁻¹, and so that the resin containing a coloring component has a melt tension Tm in the range of Tm ≥ 1.0 g and a thickness equal to one-third or more of the total thickness.

3. A method of manufacturing a multilayer resin film **characterized by** forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold are held at a higher level than the temperatures of the extruder through which a resin of low melt viscosity will pass, the corresponding manifold and the corresponding die portion adjoining that manifold, so that the adjoining resin layers have a difference in melt viscosity of 3, 000 poises or less at a shear rate of 20 to 500 s⁻¹, and so that the resin not containing any coloring component has a melt tension of 1 g or more and a thickness equal to one-third or more of the total thickness.

4. A method of manufacturing a resin-coated metal sheet **characterized by** forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold are held at a higher level than the temperatures of the extruder through which a resin of low melt viscosity will pass, the corresponding manifold and the corresponding die portion adjoining that manifold, so that the adjoining resin layers have a difference in melt viscosity of 3, 000 poises or less at a shear rate of 20 to 500 s⁻¹, and so that the resin containing a coloring component has a melt tension Tm in the range of 0.5 g ≤ Tm < 1.0 g and a thickness equal to a half or more of the total thickness, and by extruding it onto a metal sheet.

5. A method of manufacturing a resin-coated metal sheet **characterized by** forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold are held at a higher level than the temperatures of the extruder through which a resin of low melt viscosity will pass, the corresponding manifold and the corresponding die portion adjoining that manifold, so that the adjoining resin layers have a difference in melt viscosity of 3, 000 poises or less at a shear rate of 20 to 500 s⁻¹, and so that the resin containing a coloring component has a melt tension Tm in the range of Tm ≥ 1.0 g and a thickness equal to one-third or more of the total thickness, and by extruding it onto a metal sheet.

6. A method of manufacturing a resin-coated metal sheet **characterized by** forming two or more kinds of resins including at least one kind of resin containing a coloring component into a multilayer film by employing a multi-manifold die and laminating the molten resins, while controlling the temperatures of extruders installed contiguously to the manifolds, respectively, the manifolds and the die portions adjoining the manifolds, respectively, so that the temperatures of the extruder through which a resin of high melt viscosity will pass, the corresponding manifold and the corresponding die portion adjoining that manifold are held at a higher level than the temperatures of the extruder through which a resin of low melt viscosity will pass, the corresponding manifold and the corresponding die portion adjoining that manifold, so that the adjoining resin layers have a difference in melt viscosity of 3, 000 poises or less at a shear rate of 20 to 500 s⁻¹, and so that the resin not containing any coloring component has a melt tension of 1 g or more and a thickness equal to one-third or more of the total thickness, and by extruding it onto a metal sheet.

## Patentansprüche

1. Ein Verfahren zur Herstellung einer mehrlagigen Harzfolie, **gekennzeichnet durch** Formen von zwei oder mehr Arten von Harzen, die mindestens eine eine farbgebende Komponente enthaltende Art von Harz einschließen, zu einer mehrlagigen Folie unter Verwendung einer Coextrusionsdüse mit getrennten Zuführkanälen und Laminieren der geschmolzenen Harze, während die Temperaturen der Extruder, die angrenzend an den Zuführkanälen angebracht sind, der Zuführkanäle und der an die Zuführkanäle jeweils angrenzenden Abschnitte der Düse derart gesteuert werden, dass die Temperaturen des Extruders, **durch** welchen ein Harz mit hoher Schmelzviskosität durchfließen wird, des entsprechenden Zuführkanals und des entsprechenden, an diesen Zuführkanal angrenzenden Abschnitts der Düse auf einem höheren Niveau gehalten werden, als die Temperaturen des Extruders, **durch** welchen ein Harz mit niedriger Schmelzviskosität durchfließen wird, des entsprechenden Zuführkanals und des entsprechenden, an diesen Zuführkanal angrenzenden Abschnitts der Düse, so dass die angrenzenden Harzschichten einen Unterschied in der Schmelzviskosität von 3.000 Poises oder weniger bei einer Schergeschwindigkeit von 20 bis 500 s⁻¹ aufweisen, und so dass das Harz, welches eine farbgebende Komponente enthält, eine Schmelzspannung Tm im Bereich von 0,5 g ≤ Tm < 1,0 g und eine Dicke, die der Hälfte oder mehr der Gesamtdicke entspricht, aufweist.

2. Ein Verfahren zur Herstellung einer mehrlagigen Harzfolie, **gekennzeichnet durch** Formen von zwei oder mehr Arten von Harzen, die mindestens eine eine farbgebende Komponente enthaltende Art von Harz einschließen, zu einer mehrlagigen Folie unter Verwendung einer Coextrusionsdüse mit getrennten Zuführkanälen und Laminieren der geschmolzenen Harze, während die Temperaturen der Extruder, die angrenzend an den Zuführkanälen angebracht sind, der Zuführkanäle und der an die Zuführkanäle jeweils angrenzenden Abschnitte der Düse derart gesteuert werden, dass die Temperaturen des Extruders, **durch** welchen ein Harz mit hoher Schmelzviskosität durchfließen wird, des entsprechenden Zuführkanals und des entsprechenden, an diesen Zuführkanal angrenzenden Abschnitts der Düse auf einem höheren Niveau gehalten werden, als die Temperaturen des Extruders, **durch** welchen ein Harz mit niedriger Schmelzviskosität durchfließen wird, des entsprechenden Zuführkanals und des entsprechenden, an diesen Zuführkanal angrenzenden Abschnitts der Düse, so dass die angrenzenden Harzschichten einen Unterschied in der Schmelzviskosität von 3.000 Poises oder weniger bei einer Schergeschwindigkeit von 20 bis 500 s⁻¹ aufweisen, und so dass das Harz, welches eine farbgebende Komponente enthält, eine Schmelzspannung Tm im Bereich von Tm ≥ 1,0 g und eine Dicke, die einem Drittel oder mehr der Gesamtdicke entspricht, aufweist.

3. Ein Verfahren zur Herstellung einer mehrlagigen Harzfolie, **gekennzeichnet durch** Formen von zwei oder mehr Arten von Harzen, die mindestens eine eine farbgebende Komponente enthaltende Art von Harz einschließen, zu einer mehrlagigen Folie unter Verwendung einer Coextrusionsdüse mit getrennten Zuführkanälen und Laminieren der geschmolzenen Harze, während die Temperaturen der Extruder, die angrenzend an den Zuführkanälen angebracht sind, der Zuführkanäle und der an die Zuführkanäle jeweils angrenzenden Abschnitte der Düse derart gesteuert werden, dass die Temperaturen des Extruders, **durch** welchen ein Harz mit hoher Schmelzviskosität durchfließen wird, des entsprechenden Zuführkanals und des entsprechenden, an diesen Zuführkanal angrenzenden Abschnitts der Düse auf einem höheren Niveau gehalten werden, als die Temperaturen des Extruders, **durch** welchen ein Harz mit niedriger Schmelzviskosität durchfließen wird, des entsprechenden Zuführkanals und des entsprechenden, an diesen Zuführkanal angrenzenden Abschnitts der Düse, so dass die angrenzenden Harzschichten einen Unterschied in der Schmelzviskosität von 3.000 Poises oder weniger bei einer Schergeschwindigkeit von 20 bis 500 s⁻¹ aufweisen, und so dass das Harz, welches eine farbgebende Komponente enthält, eine Schmelzspannung von 1 g oder mehr und eine Dicke, die einem Drittel oder mehr der Gesamtdicke entspricht, aufweist.

4. Ein Verfahren zur Herstellung eines mit Harz beschichteten Blechs, **gekennzeichnet durch** Formen von zwei oder mehr Arten von Harzen, die mindestens eine eine farbgebende Komponente enthaltende Art von Harz einschließen, zu einer mehrlagigen Folie unter Verwendung einer Coextrusionsdüse mit getrennten Zuführkanälen und Laminieren der geschmolzenen Harze, während die Temperaturen der Extruder, die angrenzend an den Zuführkanälen angebracht sind, der Zuführkanäle und der an die Zuführkanäle jeweils angrenzenden Abschnitte der Düse derart gesteuert werden, dass die Temperaturen des Extruders, **durch** welchen ein Harz mit hoher Schmelzviskosität durchfließen wird, des entsprechenden Zuführkanals und des entsprechenden, an diesen Zuführkanal angrenzenden Abschnitts der Düse auf einem höheren Niveau gehalten werden, als die Temperaturen des Extruders, **durch** welchen ein Harz mit niedriger Schmelzviskosität durchfließen wird, des entsprechenden Zuführkanals und des entsprechenden, an diesen Zuführkanal angrenzenden Abschnitts der Düse, so dass die angrenzenden Harzschichten einen Unterschied in der Schmelzviskosität von 3.000 Poises oder weniger bei einer Schergeschwindigkeit von 20 bis 500 s⁻¹ aufweisen, und so dass das Harz, welches eine farbgebende Komponente enthält, eine Schmelzspannung Tm im Bereich von 0,5 g ≤ Tm < 1,0 g und eine Dicke, die der Hälfte oder mehr der Gesamtdicke entspricht, aufweist, und **durch** Extrudieren dieser auf ein Blech.

5. Ein Verfahren zur Herstellung eines mit Harz beschichteten Blechs, **gekennzeichnet durch** Formen von zwei oder mehr Arten von Harzen, die mindestens eine eine farbgebende Komponente enthaltende Art von Harz einschließen, zu einer mehrlagigen Folie unter Verwendung einer Coextrusionsdüse mit getrennten Zuführkanälen und Laminieren der geschmolzenen Harze, während die Temperaturen der Extruder, die angrenzend an den Zuführkanälen angebracht sind, der Zuführkanäle und der an die Zuführkanäle jeweils angrenzenden Abschnitte der Düse derart gesteuert werden, dass die Temperaturen des Extruders, **durch** welchen ein Harz mit hoher Schmelzviskosität durchfließen wird, des entsprechenden Zuführkanals und des entsprechenden, an diesen Zuführkanal angrenzenden Abschnitts der Düse auf einem höheren Niveau gehalten werden, als die Temperaturen des Extruders, **durch** welchen ein Harz mit niedriger Schmelzviskosität durchfließen wird, des entsprechenden Zuführkanals und des entsprechenden, an diesen Zuführkanal angrenzenden Abschnitts der Düse, so dass die angrenzenden Harzschichten einen Unterschied in der Schmelzviskosität von 3.000 Poises oder weniger bei einer Schergeschwindigkeit von 20 bis 500 s⁻¹ aufweisen, und so dass das Harz, welches eine farbgebende Komponente enthält, eine Schmelzspannung Tm im Bereich von Tm ≥ 1,0 g und eine Dicke, die einem Drittel oder mehr der Gesamtdicke entspricht, aufweist, und **durch** Extrudieren dieser auf ein Blech.

6. Ein Verfahren zur Herstellung einer mehrlagigen Harzfolie, **gekennzeichnet durch** Formen von zwei oder mehr Arten von Harzen, die mindestens eine eine farbgebende Komponente enthaltende Art von Harz einschließen, zu einer mehrlagigen Folie unter Verwendung einer Coextrusionsdüse mit getrennten Zuführkanälen und Laminieren der geschmolzenen Harze, während die Temperaturen der Extruder, die angrenzend an den Zuführkanälen angebracht sind, der Zuführkanäle und der an die Zuführkanäle jeweils angrenzenden Abschnitte der Düse derart gesteuert werden, dass die Temperaturen des Extruders, **durch** welchen ein Harz mit hoher Schmelzviskosität durchfließen wird, des entsprechenden Zuführkanals und des entsprechenden, an diesen Zuführkanal angrenzenden Abschnitts der Düse auf einem höheren Niveau gehalten werden, als die Temperaturen des Extruders, **durch** welchen ein Harz mit niedriger Schmelzviskosität durchfließen wird, des entsprechenden Zuführkanals und des entsprechenden, an diesen Zuführkanal angrenzenden Abschnitts der Düse, so dass die angrenzenden Harzschichten einen Unterschied in der Schmelzviskosität von 3.000 Poises oder weniger bei einer Schergeschwindigkeit von 20 bis 500 s⁻¹ aufweisen, und so dass das Harz, welches keine farbgebende Komponente enthält, eine Schmelzspannung von 1 g oder mehr und eine Dicke, die einem Drittel oder mehr der Gesamtdicke entspricht, aufweist, und **durch** Extrudieren dieser auf ein Blech.

## Revendications

1. Procédé de fabrication d'un film de résine multicouche **caractérisé par** la mise sous la forme d'un film multicouche de deux sortes de résines ou plus comprenant au moins une sorte de résine contenant un composant colorant en utilisant une filière à collecteurs multiples et en stratifiant les résines fondues, tout en régulant les températures des extrudeuses installées de manière contiguë aux collecteurs, respectivement, des collecteurs et des parties de filières adjacentes aux collecteurs, respectivement, de manière à ce que les températures de l'extrudeuse à travers laquelle une résine ayant une viscosité en fusion élevée passera, du collecteur correspondant et de la partie de filière correspondante adjacente à ce collecteur soient maintenues à un niveau plus élevé que les températures de l'extrudeuse à travers laquelle une résine ayant une faible viscosité en fusion passera, du collecteur correspondant et de la partie de filière correspondante adjacente à ce collecteur, de manière à ce que les couches de résine adjacentes aient une différence de viscosité de fusion de 3 000 poises ou moins à un taux de cisaillement de 20 à 500 s⁻¹, et de manière à ce que la résine contenant un composant colorant ait une tension de fusion Tm dans la plage de 0,5 g ≤ Tm < 1,0 g et une épaisseur égale à la moitié ou plus de l'épaisseur totale.

2. Procédé de fabrication d'un film de résine multicouche **caractérisé par** la mise sous la forme d'un film multicouche de deux sortes de résines ou plus comprenant au moins une sorte de résine contenant un composant colorant en utilisant une filière à collecteurs multiples et en stratifiant les résines fondues, tout en régulant les températures des extrudeuses installées de manière contiguë aux collecteurs, respectivement, des collecteurs et des parties de filières adjacentes aux collecteurs, respectivement, de manière à ce que les températures de l'extrudeuse à travers laquelle une résine ayant une viscosité en fusion élevée passera, du collecteur correspondant et de la partie de filière correspondante adjacente à ce collecteur soient maintenues à un niveau plus élevé que les températures de l'extrudeuse à travers laquelle une résine ayant une faible viscosité en fusion passera, du collecteur correspondant et de la partie de filière correspondante adjacente à ce collecteur, de manière à ce que les couches de résine adjacentes aient une différence de viscosité de fusion de 3 000 poises ou moins à un taux de cisaillement de 20 à 500 s⁻¹, et de manière à ce que la résine contenant un composant colorant ait une tension de fusion dans la plage de Tm ≥ 1,0 g et une épaisseur égale à un tiers ou plus de l'épaisseur totale.

3. Procédé de fabrication d'un film de résine multicouche **caractérisé par** la mise sous la forme d'un film multicouche de deux sortes de résines ou plus comprenant au moins une sorte de résine contenant un composant colorant en utilisant une filière à collecteurs multiples et en stratifiant les résines fondues, tout en régulant les températures des extrudeuses installées de manière contiguë aux collecteurs, respectivement, des collecteurs et des parties de filières adjacentes aux collecteurs, respectivement, de manière à ce que les températures de l'extrudeuse à travers laquelle une résine ayant une viscosité en fusion élevée passera, du collecteur correspondant et de la partie de filière correspondante adjacente à ce collecteur soient maintenues à un niveau plus élevé que les températures de l'extrudeuse à travers laquelle une résine ayant une faible viscosité en fusion passera, du collecteur correspondant et de la partie de filière correspondante adjacente à ce collecteur, de manière à ce que les couches de résine adjacentes aient une différence de viscosité de fusion de 3 000 poises ou moins à un taux de cisaillement de 20 à 500 s⁻¹, et de manière à ce que la résine ne contenant aucun composant colorant ait une tension de fusion de 1 g ou plus et une épaisseur égale à un tiers ou plus de l'épaisseur totale.

4. Procédé de fabrication d'une tôle revêtue de résine **caractérisé par** la mise sous la forme d'un film multicouche de deux sortes de résines ou plus comprenant au moins une sorte de résine contenant un composant colorant en utilisant une filière à collecteurs multiples et en stratifiant les résines fondues, tout en régulant les températures des extrudeuses installées de manière contiguë aux collecteurs, respectivement, des collecteurs et des parties de filières adjacentes aux collecteurs, respectivement, de manière à ce que les températures de l'extrudeuse à travers laquelle une résine ayant une viscosité en fusion élevée passera, du collecteur correspondant et de la partie de filière correspondante adjacente à ce collecteur soient maintenues à un niveau plus élevé que les températures de l'extrudeuse à travers laquelle une résine ayant une faible viscosité en fusion passera, du collecteur correspondant et de la partie de filière correspondante adjacente à ce collecteur, de manière à ce que les couches de résine adjacentes aient une différence de viscosité de fusion de 3 000 poises ou moins à un taux de cisaillement de 20 à 500 s⁻¹, et de manière à ce que la résine contenant un composant colorant ait une tension de fusion Tm dans la plage de 0,5 g ≤ Tm < 1,0 g et une épaisseur égale à la moitié ou plus de l'épaisseur totale, et par son extrusion sur une tôle.

5. Procédé de fabrication d'une tôle revêtue de résine **caractérisé par** la mise sous la forme d'un film multicouche de deux sortes de résines ou plus comprenant au moins une sorte de résine contenant un composant colorant en utilisant une filière à collecteurs multiples et en stratifiant les résines fondues, tout en régulant les températures des extrudeuses installées de manière contiguë aux collecteurs, respectivement, des collecteurs et des parties de filières adjacentes aux collecteurs, respectivement, de manière à ce que les températures de l'extrudeuse à travers laquelle une résine ayant une viscosité en fusion élevée passera, du collecteur correspondant et de la partie de filière correspondante adjacente à ce collecteur soient maintenues à un niveau plus élevé que les températures de l'extrudeuse à travers laquelle une résine ayant une faible viscosité en fusion passera, du collecteur correspondant et de la partie de filière correspondante adjacente à ce collecteur, de manière à ce que les couches de résine adjacentes aient une différence de viscosité de fusion de 3 000 poises ou moins à un taux de cisaillement de 20 à 500 s⁻¹, et de manière à ce que la résine contenant un composant colorant ait une tension de fusion dans la plage de Tm ≥ 1,0 g et une épaisseur égale à un tiers ou plus de l'épaisseur totale, et par son extrusion sur une tôle.

6. Procédé de fabrication d'une tôle revêtue de résine **caractérisé par** la mise sous la forme d'un film multicouche de deux sortes de résines ou plus comprenant au moins une sorte de résine contenant un composant colorant en utilisant une filière à collecteurs multiples et en stratifiant les résines fondues, tout en régulant les températures des extrudeuses installées de manière contiguë aux collecteurs, respectivement, des collecteurs et des parties de filières adjacentes aux collecteurs, respectivement, de manière à ce que les températures de l'extrudeuse à travers laquelle une résine ayant une viscosité en fusion élevée passera, du collecteur correspondant et de la partie de filière correspondante adjacente à ce collecteur soient maintenues à un niveau plus élevé que les températures de l'extrudeuse à travers laquelle une résine ayant une faible viscosité en fusion passera, du collecteur correspondant et de la partie de filière correspondante adjacente à ce collecteur, de manière à ce que les couches de résine adjacentes aient une différence de viscosité de fusion de 3 000 poises ou moins à un taux de cisaillement de 20 à 500 s⁻¹, et de manière à ce que la résine ne contenant aucun composant colorant ait une tension de fusion de 1 g ou plus et une épaisseur égale à un tiers ou plus de l'épaisseur totale, et par son extrusion sur une tôle.
